Europäisches Patentamt

European Patent Office

Office européen des brevets

(11) Publication number: **0 045 464**
**B1**

## EUROPEAN PATENT SPECIFICATION

(45) Date of publication of patent specification: **24.07.85**

(51) Int. Cl.⁴: **C 08 B 37/16, C 12 P 19/18**

(21) Application number: **81105874.2**

(22) Date of filing: **24.07.81**

(54) Process for producing cyclodextrins.

(30) Priority: 24.07.80 JP 101562/80
31.07.80 JP 104383/80
06.03.81 JP 31259/81

(43) Date of publication of application:
10.02.82 Bulletin 82/06

(45) Publication of the grant of the patent:
24.07.85 Bulletin 85/30

(84) Designated Contracting States:
BE DE FR GB NL

(56) References cited:
FR-A-2 457 900
US-A-3 275 548

JOURNAL OF CHROMATOGRAPHY, vol. 189,
February 15, 1980, no. 1, pages 98-100 H.
HOKSE: "Analysis of cyclodextrins by high-
performance liquid chromatography"
JOURNAL OF CHROMATOGRAPHY, vol. 121,
(1976), pages 361-9 KEIJI KAINUMA et al. "Gel
permeation chromatography of
maltosaccharides on polyacrylamide gel"

(73) Proprietor: RIKAGAKU KENKYUSHO
2-1 Hirosawa
Wako-shi Saitama-ken (JP)
(73) Proprietor: Nihon Shokuhin Kako Co., Ltd.
No. 4-1, 3-chome, Marunouchi
Chiyoda-ku Tokyo (JP)

(72) Inventor: Horikoshi, Koki
No. 4-39-8 Sakuradai
Nerima-ku Tokyo (JP)
Inventor: Yamamoto, Mikio
No. 1482 Hamazaki Asaka-shi
Saitama-ken (JP)
Inventor: Nakamura, Nobuyuki
No. 1-6-16 Naka Kunitachi-shi
Tokyo (JP)
Inventor: Okada, Minoru
No. 2-1-6 Fuyodai Mishima-shi
Shizuoka-ken (JP)
Inventor: Matsuzawa, Masamitsu
No. 2954 Imaizumi Fuji-shi
Shizuoka-ken (JP)
Inventor: Ueshima, Osamu
No. 47-14 Kamo Mishima-shi
Shizuoka-ken (JP)
Inventor: Nakakuki, Teruo
No. 22-15 Higashiarai Yatabe-cho
Tsukuba-gun Ibaragi-ken (JP)

(56) References cited:
JOURNAL OF CHROMATOGRAPHY, vol. 172, (1979), pages 490-492 B. ZSADON et al. "Separation of cyclodextrins by high-performance liquid chromatography"
DIE STARKE, vol. 30, no. 8, August 1978, B. ZSADON et al. "Chromatography of alpha,beta and cyclodextrin on dextran gel columns", pages 276-9

(74) Representative: Vossius Vossius Tauchner Heunemann Rauh
Siebertstrasse 4 P.O. Box 86 07 67
D-8000 München 86 (DE)

2

## Description

This invention relates to a process for producing γ-cyclodextrin and more particularly, to a process for recovering γ-cyclodextrin from a sugar solution containing cyclodextrins without using any organic solvents i.e. by non-solvent process. According to this invention, the sugar solution containing cyclodextrins as primary ingredients is brought into contact with a hydrophobic, synthetic adsorption resin comprising a porous polymer, to thereby isolate γ-cyclodextrins from the solution.

Cyclodextrins are non-reducing dextrins which have a ring structure wherein glucose units are joined to one another by α-1,4-glucosidic linkages. Generally, α-cyclodextrin, β-cyclodextrin and γ-cyclodextrin, which consists of 6, 7 and 8 glucose units, respectively, are well known. The cyclodextrin molecule includes various kinds of organic compounds into the cavity of the ring structure which is in a hydrophobic atmosphere to form an inclusion compound. Alpha-, beta- and gamma-cyclodextrins have many different physical properties from one another: the molecular weights (α=973, β=1135 and γ=1297), the cavity diameters of ring structure (α=6—6 Å, β=7—8 Å and γ=9—10 Å) and water solubility (at 25°C, g/100 ml·H$_2$O:α=14.5, β=1.85 and γ=23.2).

Accordingly, cyclodextrins find wide use in medicines, agricultural chemicals, cosmetics and foods and new applications thereof are expected to be found. Only a mixture of α-, β- and γ-cyclodextrins and starch hydrolyzate containing acyclic dextrins and β-cyclodextrins precipitated and separated from such mixture, are products which can be produced, at present, at relatively low cost. Alpha-cyclodextrin and γ-cyclodextrin can not be produced at low cost. The industrial production of α- and γ-cyclodextrins is deemed difficult, although they have special properties and their specific applications are expected as described above. This is due to the difference of water solubility of α-, β- and γ-cyclodextrins. Namely, the water-solubility of β-cyclodextrin is very low compared with α- and γ-cyclodextrins and therefore, it is easily precipitated and separated from the starch hydrolyzate solution containing cyclodextrins. On the contrary, α- and γ-cyclodextrins have relatively high water solubilities and so, it is difficult without using any organic solvents to separate these cyclodextrins as crystal from the starch hydrolyzate solution containing cyclodextrins.

There are many proposed processes for producing cyclodextrins hereinbefore. One typical process is such that liquefied starch products are reacted with cyclodextrin glycosyltransferase, hereinafter refer to "CGTase", to obtain starch hydrolyzate solution containing cyclodextrins followed by adding an organic solvent such as trichloroethylene, tetrachlorethane or bromobenzene to precipitate cyclodextrins as a complex and to separate cyclodextrins from the starch hydrolyzate.

An improved process of the typical one mentioned above has been proposed, which comprises reacting the starch hydrolyzate containing cyclodextrins with glucoamylase in order to hydrolyse acyclic dextrins to convert them into glucose and then adding an organic solvent to the resulting sugar solution containing cyclodextrins and glucose to precipitate only cyclodextrins (see Denpun-Kagaku (Starch Science) 22, pp. 6—10 (1975); Japanese Patent No. 1,034,493).

However, organic solvents are used to precipitate cyclodextrins in all the aforementioned processes and contaminate the cyclodextrins thus obtained so that they cannot be utilized in the production of medicines or foods due to the toxicity of the solvents and the production cost should have been high.

Some processes for producing cyclodextrins without using any organic solvents, that is, non-solvent processes have recently been discussed and proposed. There are proposed two non-solvent processes, that is, the one comprising reacting liquefied starch with a new CGTase having an optimum pH on the alkaline side instead of known CGTases, concentrating the reaction mixture and adding a small amount of cyclodextrin as a seed crystal to precipitate cyclodextrins (see Japanese Patent No. 914,137) and the other comprising contacting a solution containing cyclodextrins and reducing sugars with OH type of anion exchange resin to adsorb only reducing sugars on the resin to thereby separate cyclodextrins from the reducing sugars (See Japanese Patent Disclosure No. 136,889/1976).

These non-solvent processes are advantageous since cyclodextrins obtained by the processes have no toxicity of the solvents so that they can widely be used in the field of medicines or foods. However, these processes have some disadvantages: the former process requires complicated operations and the latter process wherein OH type of anion exchange resin is used is not sufficient to effectively and continuously produce cyclodextrins because elution rate of reducing sugars adsorbed on the resin is too low and, if HCl is used to increase the elution rate, a regeneration of the resin after HCl elution is required and further, a temperature of liquid passing through the column packed with the resin should be controlled below 20°C in order to prevent reducing sugars adsorbed from decomposing. In addition, the aforementioned non-solvent processes are those for producing β-cyclodextrin or a mixture of α-, β- and γ-cyclodextrins but are not those for selectively separating α-cyclodextrin or γ-cyclodextrin.

As stated above, cyclodextrins (in particular, α-cyclodextrin or γ-cyclodextrin) which have special molecular structure and properties and from which possible utilization in a wide field is expected may extremely be useful in view of an industrial and an economic points, if α-cyclodextrin and γ-cyclodextrin could be produced advantageously without using any organic solvents.

It is the object of this invention to provide a process for producing γ-cyclodextrin by a non-solvent process at high efficiency.

The inventors have studied the matter to accomplish the abovementioned objects and now found that only γ-cyclodextrin is selectively and efficiently obtained by a process comprising bringing a sugar solution containing cyclodextrins and reducing sugars as primary ingredients into contact with a synthetic adsorption resin comprising a porous polymer to adsorb γ-cyclodextrin or β- and γ-cyclodextrins, and then eluting the adsorbed cyclodextrin(s) with water, wherein the column temperature during the adsorption and the elution is controlled.

According to the first embodiment of the present invention, there is provided a process for producing γ-cyclodextrin comprising: bringing a sugar solution containing cyclodextrins into contact with a hydrophobic, synthetic adsorption resin comprising a porous polymer and having a selective adsorptivity to cyclodextrins, to selectively adsorb only γ-cyclodextrin and then, eluting the adsorbed γ-cyclodextrin with water.

According to the second embodiment of the present invention, there is provided a process for producing γ-cyclodextrin comprising: bringing a sugar solution containing cyclodextrins into contact with a hydrophobic, synthetic adsorption resin comprising a porous polymer and having a selective adsorptivity to cyclodextrins, to selectively adsorb only β-cyclodextrin and γ-cyclodextrin, eluting the adsorbed β-cyclodextrin with water and then eluting the adsorbed γ-cyclodextrin with water.

Figure 1 shows an elution pattern according to the first embodiment of the present invention.

Figure 2 shows an elution pattern according to the second embodiment of the present invention. In Figures 1 and 2, A, B, C and D show concentration of eluted reducing sugars, α-cyclodextrin, β-cyclodextrin and γ-cyclodextrin in each fraction, respectively, and E shows a column temperature;

The process of the present invention will now be described in detail.

According to the present invention, when starch hydrolyzate solution containing cyclodextrins is brought into contact with a specific synthetic adsorption resin, only cyclodextrins are adsorbed and the starch hydrolyzate other than cyclodextrins are not adsorbed at all. If some specific resin is used, α-cyclodextrin is not adsorbed and further if a column temperature at which the starch hydrolyzates solution containing cyclodextrins is fed to the column is suitably selected, β-cyclodextrin is not adsorbed, either and thus, only β- and γ-cyclodextrins or only γ-cyclodextrin may be selectively adsorbed. When β- and γ-cyclodextrin are adsorbed, they can be efficiently separated from each other by continuously or stepwisely changing the column temperature while eluting. Thus, high pure γ-cyclodextrin can be efficiently obtained in a high yield.

Starting materials employed in the process include a starch hydrolyzate containing cyclodextrins and a sugar solution containing γ-cyclodextrin obtained by removing a smaller or greater part of α- and/or β-cyclodextrins from the starch hydrolyzate, which are prepared by reacting starch such as potato starch and corn starch gelatinized or liquefied by a conventional process, with a known cyclodextrin glycosyltransferase produced by a microorganism such as *Bacillus macerans* (IFO-3490, IAM-1227), *Bacillus circulans* (ATCC 61, ATCC 9966) and alkalophilic bacteria, for example, *Bacillus* sp. No. 38-2 (ATCC-21783).

The viscosity of the hydrolyzate or the sugar solution containing cyclodextrans to be brought into contact with the resin is preferably reduced to facilitate the operation and the washing of the resin packed column so that straight or branched chain dextrins other than cyclodextrins is preferably converted into reducing sugars by reacting the dextrins with a saccharogenic enzyme having poor, if any, hydrolytic action on cyclodextrins. The saccharogenic enzyme includes β-amylase and glucoamylase having poor, if any, α-amylase activity.

The sugar solution thus obtained by action of the saccharogenic enzyme and containing mainly cyclodextrin(s) and reducing sugars is brought into contact with the synthetic adsorption resin. For example, the solution may be continuously passed through the resin packed column from the top to the bottom or in contrast with this. By contact with the resin, β- and γ-cyclodextrins or if desired only γ-cyclodextrin contained in the sugar solution are selectively and completely adsorbed on the resin. On the other hand, α-cyclodextrin, reducing sugars and unhydrolyzed dextrins (and if desired β-cyclodextrin) contained in the sugar solution are not adsorbed at all and flow out of the column quantitatively. Cyclodextrins to be adsorbed or eluted can be selected by changing the synthetic adsorption resin and the temperature at which adsorption or elution are effected.

The synthetic adsorption resin employed in the present invention is a synthetic adsorbent having a huge net structure. The porous polymer adsorption resin may be in the form of sphere or plate or in the amorphous form. Examples of hydrophobic organic porous resins which may be used include, styrene-divinylbenzene copolymer, ethylene-vinylbenzene copolymer, fluoroplastics, silicone resins and polyolefinic resins. Styrene-divinylbenzene copolymer has been found to be particularly useful.

Styrene-divinylbenzene copolymer having a large number of micropores can be obtained in spherical form by suspending and polymerizing styrene and divinylbenzene (crosslinking agent) in water. Porous styrene-divinylbenzene copolymer having more than about 100 m$^2$/g of specific surface is particularly suitable for use in the process of the first and the second embodiments of the present invention.

Such a copolymer has a very low polarity, a large internal surface, and the property that water vapour can be adsorbed but that liquid water cannot enter the pores.

In general, when carrying out the process of the present invention, the composition of the resin used and the specific surface thereof have no particular limitation. Generally, any polymer having less than about 1,000 m²/g of specific surface may be used. The porosity of the polymer is preferably in the range of from 35 to 95%, more preferably 40% to 90%. A porosity of less than 35% results in a decrease in surface and an increase in weight, while a porosity of more than 95% results in deformation of the polymer particles when charging a column, leading eventually to an increase in water pressure loss.

It is also possible to use a polymer in the form of a hydrophobic derivative as a result of treatment with for example, a silane. The pore size of the copolymer has an important influence on the surface area of the adsorbent. It is generally necessary to have apertures of a sufficient and proper size to enable the cyclodextrins to migrate therethrough to the adsorption surface and then be adsorbed.

There is an inversely proportional relationship between surface area and pore size. The smaller the pore size of the adsorbent, the larger is the surface area. Therefore, considering the molecular weights ($\alpha$:973, $\beta$:1135, $\gamma$:1297) and sizes of cyclodextrins, an adsorbent having about from 100 to 1,000 m²/g of specific surface and suitable outward shape is preferably used.

Porous styrene-divinylbenzene copolymer adsorbents having properties as described above include, for example, Amberlite XAD-2 and 4-(Rohm & Haas Co. USA.), Diaion-HP (Mitsubishi Chemical Ind. Ltd., Japan) and Porapak-N, -P, -Q, -R and Porapak-QS (Waters Associates, Inc. USA.). Amerblite, Diaion and Porapak are Trade Marks of the indicated companies.

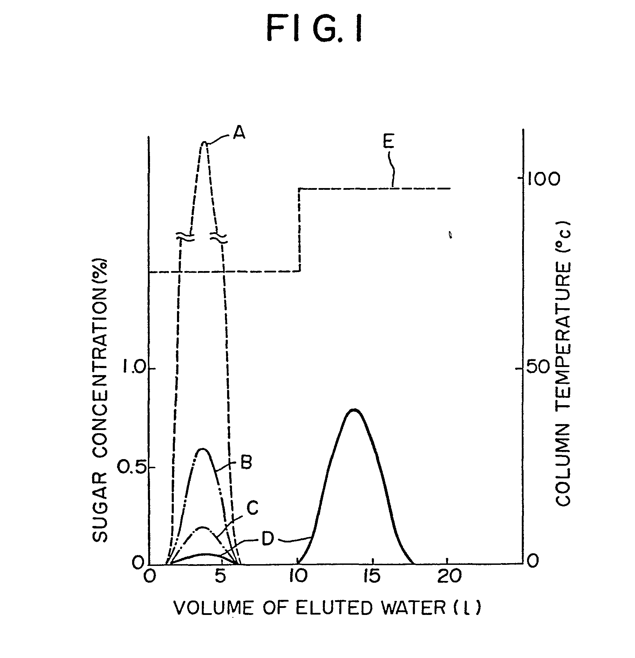

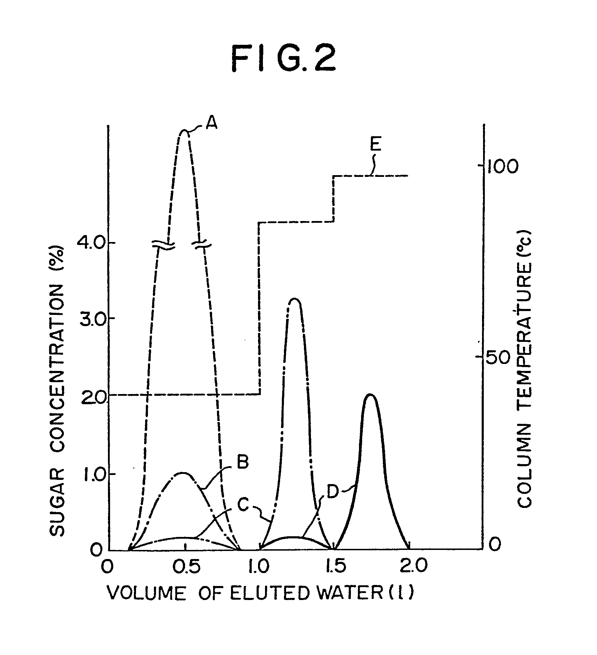

The sequence in which cyclodextrins are eluted and the temperature at which each of cyclodextrins is eluted depend on the properties of the adsorption resin used. For example, Diaion-HP 20 does not adsorb $\alpha$-cyclodextrin at all and in the range of 0°C to 80°C, it adsorbs $\beta$-cyclodextrin at lower temperature but it does not adsorb $\gamma$-cyclodextrin with increase in temperature. On the other hand, $\gamma$-cyclodextrin is completely adsorbed on the resin at a temperature within this range. Namely, only $\gamma$-cyclodextrin is selectively adsorbed in the range of temperature of about 70°C to about 80°C. The temperature at which adsorption is effected is kept higher than that at which $\beta$-cyclodextrin is not substantially adsorbed and lower than that at which $\gamma$-cyclodextrin is not substantially eluted (at which $\beta$-cyclodextrin is eluted) in order to adsorb only $\gamma$-cyclodextrin (see Figure 1) in the process of the first embodiment of the present invention. The temperature at which adsorption is effected is kept lower than that at which most of $\beta$-cyclodextrin is adsorbed in order to adsorb both $\beta$- and $\gamma$-cyclodextrins and then the first elution is effected at an elevated temperature sufficient to elute $\beta$-cyclodextrin with, if any, a small amount of $\gamma$-cyclodextrin after which the second elution is effected at a further elevated temperature sufficient to elute $\gamma$-cyclodextrin to obtain pure $\gamma$-cyclodextrin (see Figure 2). Either of the two processes described above may be selected to adapt the object thereof. The former process is simple and advantageous to obtain only $\gamma$-cyclodextrin from the sugar solution which contains relatively a great amount of $\gamma$-cyclodextrin and, the latter one is advantageous to obtain $\gamma$-cyclodextrin as by product by separating $\beta$- and $\gamma$-cyclodextrin from the sugar solution which contains relatively a great amount of $\alpha$-cyclodextrin.

As described above, cyclodextrins are eluted and separated with water while being heated in the process of the present invention. In general, substances adsorbed on an adsorbent are eluted and separated with some suitable organic solvents, bases or acids having an interaction with the surface of the adsorbent. On the contrary, adsorbed cyclodextrins can be easily and suitably eluted with hot water or water vapor without using such eluants as organic solvents in the processes of the first and the second embodiments.

It is preferred to saturate the synthetic adsorption resin with cyclodextrins only which can be adsorbed on the resin before the eluation in order to perform high productivity per the resin weight.

The flow rate of the sugar solution fed into the column is intimately related to the diffusion rate of cyclodextrin toward the inside of the adsorption resin particles within the column and the lower the flow rate, the more is the advantage. In general, a space velocity (SV) may be in practice kept at about 1, preferably about 0.5.

An amount of cyclodextrins adsorbed on the resin is almost never related to a cyclodextrins concentration in the sugar solution but is proportional to the absolute amount of cyclodextrins contained.

A concentration of the cyclodextrin-containing sugar solution to be passed through the column is preferably less than 30% by weight due to the low specific gravity of the porous adsorption resin. However, if any means are provided to prevent the resin from floating and if channeling does not occur, the concentration of the sugar solution has no limitation theoretically.

As mentioned above, according to the processes of the first and the second embodiments of the present invention, each of $\alpha$-, $\beta$- and $\gamma$-cyclodextrins, especially $\gamma$-cyclodextrin can be separated and recovered from the starch hydrolyzate containing cyclodextrins prepared by reacting gelatinized or liquefied starch with CGT ase without using any organic solvents as employed in hitherto processes. These processes of the present invention can continuously be performed with a high efficiency to produce cyclodextrins, particularly $\gamma$-cyclodextrin.

The present invention will now be described with reference to the following Examples.

Reference Example

15 L. of potato starch solution (4% (w/v), starch content: 600 grams) was adjusted to pH 9.0 with NaOH and was homogeneously gelatinized at a temperature of 125°C for 30 minutes. After cooling the gelatinized starch solution to 60°C, 600 mg of the enzyme produced by *Bacillus sp.* No. 38-2 (Bikoken No. 614, ATCC 21783) (30,000 units/g and produced by Meito Sangyo Co., Ltd.) was added to the gelatinized starch solution, which was reacted at 60°C for 30 hours. After the completion of the reaction, the reaction mixture was heated at 100°C for 5 minutes to inactivate the enzyme, and thereafter cooled to 55°C and adjusted to pH 5.0 with hydrochloric acid. 900 Mg of glucoamylase (2,000 units/gram, the product (GAS-1) of Amano Pharm. Co., Ltd). were added to the mixture and reaction was allowed to continue for 20 hours. The reaction mixture was decolorized with activated carbon, filtered, deionized and concentrated to 50% by weight solids content. 500 Mg of β-cyclodextrin were then added to the concentrate as seed material and the mixture was allowed to stand overnight in a cold chamber. The resulting precipitated β-cyclodextrin was removed by filtration to obtain a filtrate containing cyclodextrins with a much reduced content of β-cyclodextrin.

Example 1

The filtrate obtained with reference Example (Bx 30.0, d=1.12, 387 ml, 130 g of solids, containing α:2.5%, β:6.8% and γ:10.7% by weight) was fed to a column packed with 500 ml of Diaion-HP-20, at a rate of SV=0.5 at 40°C, and then water was passed through the column to wash out the non-adsorbed substances. The column was then raised to 85°C and adsorbed material thereon was eluted with 500 ml of water, a fraction containing β-cyclodextrin mixed with a small amount of γ-cyclodextrin (13.5 g of the solids content) was obtained. The column was then raised to 97°C and adsorbed material thereon was eluted with 500 ml of water. The eluate was concentrated and 30 ml of 25% solution was obtained (see Figure 2). The resulting solution was then decolourized, deionized, and concentrated to Bx 72. A small amount of seed material was added to the concentrate and the mixture was allowed to stand overnight at 4°C while stirring. The resulting crystalline γ-cyclodextrin was filtered and dried at 60°C for 12 hours in vacuum dryer. 10.5 Grams of crystalline powder was obtained. The yield was 75.5% based on γ-cyclodextrin contained in the sugar solution originally passed through the column. A purity of γ-cyclodextrin thus obtained was analyzed by high performance liquid chromatography and was 99.2%.

Example 2

Reference Example was repeated except that 900 mg of bacterial liquefying α-amylase (10,000 units/g the product of Daiwa Kasei Ind. Co., Ltd.) was substituted for glucoamylase. A sugar solution containing cyclodextrins (α: 2.5%, β:6.8%, γ:10.7%) was obtained. Glucoamylase (Sumizyme 2000, the product of Shin Nippon Kagaku Co., Ltd. 2000 units/g) was added to the sugar solution in an amount of 0.05% by weight of the solids and the mixture was reacted at pH 5.5. overnight at 50°C. The reaction mixture was then heated at 120°C for 15 minutes to inactivate the enzyme, decolorized and deionized.

The resulting solution (Bx 28.5, d=1.11, 1.26 liter, 400 g of solids) was fed to a column packed with 3 liter of Diaion-HP-50 at a rate of SV=1 at 75°C by ascending method and then water was passed through the column by descending method to wash out the non-adsorbed substances.

The column was then raised to 97°C and adsorbed material thereon was eluted with 10 liter of water at SV=1. The eluate was concentrated and 140 ml of 28% solution (39.2 g of the solids content) was obtained (see Figure 1). The solution was then decolorized, deionized and concentrated to Bx 68. A small amount of seed material was added to the concentrate and the mixture was allowed to stand overnight at 4°C while stirring. The resulting crystalline γ-cyclodextrin was filtered and dried at 60°C for 24 hours in a vacuum dryer. 31 Grams of crystalline powder was obtained. The yield was 72.4% based on γ-cyclodextrin contained in the sugar solution first passed through the column. A purity of γ-cyclodextrin thus obtained was analyzed by high performance liquid chromatography and was 99.6%.

Claims

1. A process for the production of γ-cyclodextrin, which comprises bringing a sugar solution containing cyclodextrins into contact with a porous hydrophobic synthetic polymer adsorption resin having a selective adsorptivity for cyclodextrins to selectively adsorb only γ-cyclodextrin and eluting γ-cyclodextrin from the resin, with water.

2. A process for the production of γ-cyclodextrin, which comprises bringing a sugar solution containing cyclodextrins into contact with a porous hydrophobic synthetic polymer adsorption resin having a selective adsorptivity for cyclodextrins to selectively adsorb β- and γ-cyclodextrins, eluting β-cyclodextrin from the resin with water and then, eluting γ-cyclodextrin from the resin with water.

3. A process according to claim 2, wherein the cyclodextrins are eluted with water the temperature of which varies continuously or stepwisely.

4. A process according to claims 1 or 2, wherein the solution containing cyclodextrins is a starch hydrolyzate solution which has been obtained by reacting gelatinized or liquefied starch with cyclodextrin glycosyltransferase or a said hydrolyzate solution from which a smaller or greater part of α- and/or β-cyclodextrins have been removed.

5. A process according to claims 1 or 2, wherein the synthetic adsorption resin is a porous styrene-divinylbenzene copolymer.

**Patentansprüche**

1. Verfahren zur Herstellung von γ-Cyclodextrin, dadurch gekennzeichnet, daß man eine Cyclodextrine enthaltende Zuckerlösung mit einem porösen, hydrophoben, synthetischen, polymeren Adsorptionsharz, das selektive Adsorptionsfähigkeit für Cyclodextrine aufweist, in Berührung bringt, un nur γ-Cyclodextrin selektiv zu adsorbieren, und das γ-Cyclodextrin mit Wasser aus dem Harz eluiert.

2. Verfahren zur Herstellung von γ-Cyclodextrin, dadurch gekennzeichnet, daß man eine Cyclodextrine enthaltende Zuckerlösung mit einem porösen, hydrophoben, synthetischen, polymeren Adsorptionsharz mit selektiver Adsorptionsfähigkeit für Cyclodextrine in Berührung bringt, um β- und γ-Cyclodextrine selektiv zu adsorbieren, das β-Cyclodextrin mit Wasser aus dem Harz eluiert und dann das γ-Cyclodextrin mit Wasser aus dem Harz eluiert.

3. Verfahren nach Anspruch 2, wobei die Cyclodextrine mit Wasser eluiert werden dessen Temperatur sich kontinuierlich oder stufenweise ändert.

4. Verfahren nach den Ansprüchen 1 oder 2, wobei die Cyclodextrine enthaltende Lösung eine Stärke-Hydrolysatlösung ist, die durch Umsetzung von gelatinierter oder verflüssigter Stärke mit Cyclodextringlycosyltransferase erhalten wurde, oder eine solche Hydrolysatlösung, aus der ein kleinerer oder größerer Teil der α-und/oder β-Cyclodextrine entfernt worden ist.

5. Verfahren nach den Ansprüchen 1 oder 2, wobei das synthetische Adsorptionsharz ein poröses Styrol-Divinylbenzol-Copolymerisat ist.

**Revendications**

1. Procédé de production de γ-cyclodextrine, qui comprend la mise en contact d'une solution de sucre contenant des cyclodextrines avec une résine d'adsorption de polymère synthétique, hydrophobe, poreuse, ayant une capacité d'adsorption sélective pour les cyclodextrines de manière à n'adsorber sélectivement que la γ-cyclodextrine et l'élution de la γ-cyclodextrine de la résine avec de l'eau.

2. Procédé de production de γ-cyclodextrine, qui comprend la mise en contact d'une solution de sucre contenant des cyclodextrines avec une résine d'adsorption de polymère synthétique, hydrophobe, poreuse, ayant une capacité d'adsorption sélective pour les cyclodextrines de manière à adsorber sélectivement les β- et γ-cyclodextrines, l'élution de la β-cyclodextrine de la résine avec de l'eau et ensuite l'élution de la γ-cyclodextrine de la résine avec de l'eau.

3. Procédé suivant la revendication 2, caractérisé en ce que les cyclodextrines sont éluées avec de l'eau dont la température varie de façon continue ou graduelle.

4. Procédé suivant l'une ou l'autre des revendications 1 et 2, caractérisé en ce que la solution contenant des cyclodextrines est une solution d'hydrolysat d'amidon qui a été obtenue en faisant réagir de l'amiden gélatinisé ou liquéfié avec de la cyclodextrine glycosyltransférase ou une solution d'hydrolysat de ce type, dont une partie plus ou moins importante d'α- et/ou de β-cyclodextrines a été séparée.

5. Procédé suivant l'une ou l'autre des revendications 1 et 2, caractérisé en ce que la résine d'adsorption synthétique est un copolymère de styrène-divinylbenzène poreux.

# FIG. 1

# FIG.2